# EUROPÄISCHE PATENTANMELDUNG

(11) **EP 0 780 991 A2**
(43) Veröffentlichungstag der Anmeldung: **25.06.1997**
(21) Anmeldenummer: 96118547.7
(22) Anmeldetag: 19.11.1996
(51) Int. Cl.: H04B 1/38

(54) **Adapterkabel für Mobilfunkgerät**

(30) Priorität: 20.12.1995 DE 29520231 U
(71) Anmelder: Martin Dawes Telecommunications (Deutschland) GmbH, 85399 Hallbergmoos (DE)
(72) Erfinder: Binter,Gerhard, 80804 München (DE)
(74) Vertreter: Zeitler & Dickel

(57) **Zusammenfassung**

Ein Adapterkabel zur Verbindung eines Funktelefons mit dem Bordnetz eines Kraftfahrzeuges umfaßt eine Adapterschaltung, die eine Schnittstellenadaption zwischen einer Anschlußbox und dem Kraftfahrzeug-Bordnetz bildet. Das Adapterkabel kann eine Schaltung zur Siebung von Wechselspannungsanteilen enthalten. Die Schaltung ist unempfindlich gegen verpolte Betriebsspannung und Überspannungen, wie sie kurzzeitig in KFZ-Bordnetzen vorkommen können. Damit vereinfacht sich die Installation eines Funktelefons, und es wird eine Installationseinheit zur Verfügung gestellt, die nachteilige Einzelinstallationen überflüssig macht.

## Beschreibung

Die Erfindung betrifft ein Adapterkabel zur Verbindung eines Funktelefons mit dem Bordnetz eines Kraftfahrzeuges.

Die Installation eines Funktelefons innerhalb eines Kraftfahrzeuges gestaltet sich üblicherweise recht aufwendig. Es ist eine Vielzahl von Einzelinstallationen erforderlich. Es müssen Verbindungskabel verlegt werden von der Anschlußbox des Funktelefons zum Bordnetz des Kraftfahrzeuges, zum Freisprechmikrofon sowie zu den Lautsprechern. Dieser Vorgang ist zeit- und kostenaufwendig.

Der Erfindung liegt dementsprechend die Aufgabe zugrunde, die Installation eines Funktelefons in einem Kraftfahrzeug wesentlich zu vereinfachen und eine Installationseinheit zur Verfügung zu stellen, die die nachteiligen Einzelinstallationen überflüssig macht.

Gelöst wird diese Aufgabe gemäß der Erfindung durch die im Kennzeichen des Hauptanspruches angegebenen Merkmale, wobei hinsichtlich bevorzugter Ausgestaltungen des erfindungsgemäßen Adapterkabels auf die Merkmale der Unteransprüche verwiesen wird.

Nach der Erfindung umfaßt das Kabel eine Adapterschaltung, die eine Schnittstellenadaption zwischen einer Anschlußbox und dem Kfz-Bordnetz bildet.

Diese Adapterschaltung enthält alle wesentlichen Anschlußelemente, so daß sich die Gesamtinstallation denkbar einfach gestaltet. Die Anschlußbox bewerkstelligt im wesentlichen die Funktionen Freisprechen und Laden des Telefonakkus, wobei im Kraftfahrzeug Mikrofon und Lautsprecher bereits vorinstalliert sind. Stromversorgung, Lautsprechersignal, Zündung und Mute-Signal zur Stummschaltung des Autoradios während eines Telefonats werden direkt von der einen zur anderen Schnittstelle durchgeleitet. Damit das im Fahrzeug installierte Elektretmikrofon funktioniert, wird dem Mikrofonsignal über einen Arbeitswiderstand eine Gleichspannung aufgeklemmt. Die Gleichspannung ist von der Anschlußbox mittels Kondensator entkoppelt. Desweiteren wird eine Pegelanpassung des Nutzsignals vorgenommen. Die Gleichspannung wird über einen integrierten Längsregler vom Bordnetz gewonnen. Es besteht die Möglichkeit, das Lautsprechersignal galvanisch getrennt zu übertragen, falls die Leistungsendstufe in Brücke betrieben wird. Es muß hierfür ein Übertrager bestückt werden. Somit ist die Leiterplatte auch für andere Telefontypen verwendbar.

Die Schaltung ist unempfindlich gegen verpolte Betriebspannung und Überspannungen, wie sie kurzzeitig in Kfz-Bordnetzen vorkommen können.

Die Adapterschaltung enthält zweckmäßig eine Schaltung zur Siebung von Wechselspannungsanteilen. Die Schaltung besteht aus zwei Kondensatoren und einer Spule.

Zur Ableitung hochfrequenter Störungen sind vorteilhaft vier Kondensatoren innerhalb der Adapterschaltung vorgesehen. Darüber hinaus ist ein Spannungsteiler zur Anpassung des Sprachsignals angeschlossen. Die Gleichstromversorgung erfolgt über einen Arbeitswiderstand innerhalb der Adapterschaltung.

Weitere Vorteile, Einzelheiten und erfindungswesentliche Merkmale ergeben sich aus der nachfolgenden Beschreibung einer bevorzugten Ausgestaltung der Erfindung unter Bezugnahme auf die beigefügten Zeichnungen. Dabei zeigen im einzelnen:
- Fig. 1: eine schematische Darstellung des Adapterkabels als Blockdarstellung und
- Fig. 2: ein Schaltbild der Adapterschaltung gemäß der Erfindung.

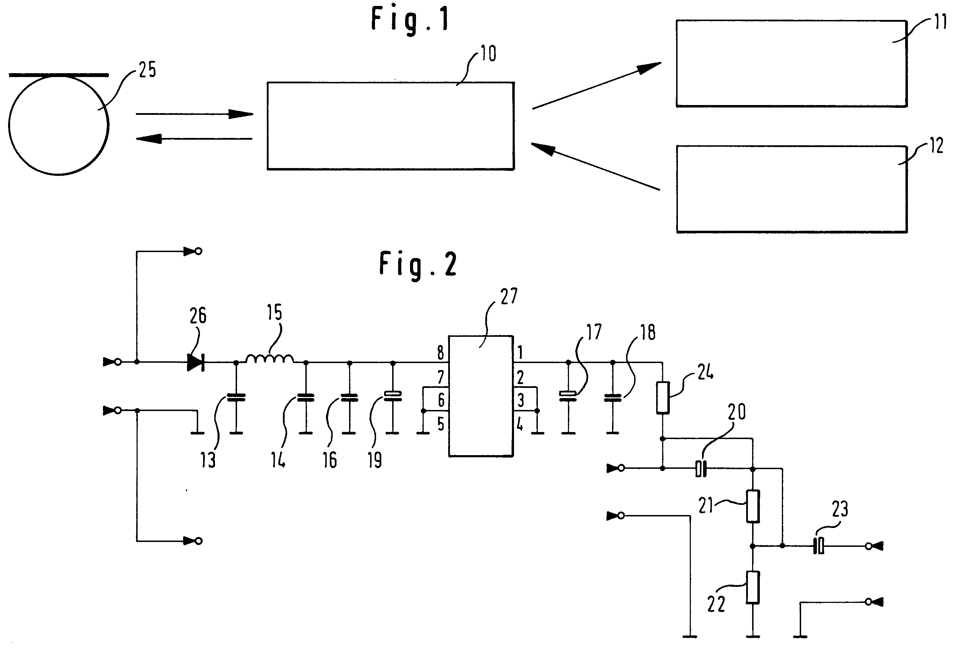

Wie in Fig. 1 schematisch dargestellt ist, bildet die Adapterschaltung 10 eine Schnittstellenadaption zwischen der Anschlußbox 11 und dem Kfz-Bordnetz 12; sie steht in Kommunikation mit dem Freisprechmikrofon 25.

Der Aufbau der Adapterschaltung 10 wird nachfolgend unter Bezugnahme auf Fig. 2 näher erläutert.

12 V werden vom Kfz-Bordnetz 12 in die Schaltung eingespeist. Die Diode 26 arbeitet als Verpolschutz. Wird also die Betriebsspannung verkehrt angeschlossen, fließt kein Strom, und die nachfolgende Schaltung bleibt schadfrei.

Die Kondensatoren 13 und 14 sowie die Spule 15 verhindern, daß hochfrequente Störungen vom Bordnetz in die Schaltung gelangen und daß umgekehrt auch von der Schaltung keine in das Bordnetz geführt wird.

Die 12 V-Gleichspannungen werden von einem IC 27 auf 5 V Gleichspannung herabgesetzt. Die Spannung ist sehr temperaturstabil, brummspannungsarm und unempfindlich gegenüber Spannungsschwankungen am Bordnetz. Das IC 27 arbeitet nach dem Prinzip der Längsstabilisierung. Die Kondensatoren 16, 17, 18 und 19 leiten hochfrequente Störungen ab, verhindern ungewolltes Oszillieren der Schaltung und glätten Brummspannungen. Somit steht am heißen Anschluß von dem Kondensator 18 eine sehr stabile, saubere Gleitspannung mit 5 V zur Verfügung.

Ein Mikrofon 25 ist derart angeschlossen, daß es mit Gleichstrom über dieselben Anschlüsse versorgt wird, über die das Sprachsignal übertragen wird. Dies wird mittels eines Arbeitswiderstandes 24 bewerkstelligt. Die erzeugte Spannung mit 5 V wird somit hochohmig in das Mikrofon, das einen Vorverstärker enthält, eingespeist. Der Gleichspannungsanteil am Mikrofon pendelt sich auf die halbe Spannung von 2,5 V ein.

Der Kondensator 20 verhindert, daß der nachfolgende Spannungsteiler, gebildet aus den Widerständen 21 und 22, den Arbeitspunkt der davorliegenden Stufe nicht beeinflußt. Der Kondensator 20 ist so ausgelegt, daß er die tieffrequenten Sprachsignale ebenfalls zu übertragen vermag. Der Spannungsteiler 21, 22 paßt den Pegel des Sprachsignals auf 3 dB an. Um letztlich die Eingangsstufe von dem nachfolgenden Verstärker gleichstrommäßig nicht zu beeinflussen, wird auch hier ein Kondensator 23 plaziert.

Es soll an dieser Stelle noch einmal ausdrücklich zum Ausdruck gebracht werden, daß es sich bei der vorangehenden Beschreibung lediglich um eine solche beispielhaften Charakters handelt und daß verschiedene Abänderungen und Modifikationen möglich sind, ohne dabei den Rahmen der Erfindung zu verlassen.

So liegt es beispielsweise ohne weiteres im Rahmen der Erfindung, eine entsprechende Abweichung bzw. Abänderung der Pegelanpassung des Nutzsignals derart vorzusehen, daß auch zusätzlich weitere Mobiltelefone eingesetzt werden können.

Außerdem liegt es selbstverständlich im Rahmen der Erfindung, das beschriebene Adapterkabel mit einer zeitverzögerten Stromabschaltung auszustatten; hierbei kann dann die Anordnung derart getroffen sein, daß nach Abschaltung der Zündung im Fahrzeug eine elektronische Zeitabschaltung startet und noch über einen bestimmten Zeitraum hinweg, beispielsweise etwa eine Stunde lang, die Stromverbindung zum Fahrzeugbordnetz aufrechterhält. Aufgrund der hierdurch bewirkten elektronischen Unterbrechung wird im Bordnetz vermieden, daß die Autobatterie unnötig belastet wird.

Schließlich ist es beispielsweise möglich, mit einem elektronischen Übertrager eine elektronische Anpassung im Bereich der NF-Signalübertragung zu erzielen. Somit kann dann eine Anschlußbox mit NF-Ausgang über eine Brückenendstufe an ein Autoradio mit NF-Eingang über eine Signalendstufe störungsfrei angeschlossen werden.

Soweit vorstehend eine bestimmte Ausgestaltung des Adapterkabels mittels bestimmter Leitungen, Verbindungen oder Schaltungen beschrieben wurde, versteht es sich von selbst, daß der einer derartigen Ausgestaltung zugrundeliegende wesentliche Erfindungsgedanke auch mittels entsprechend geeigneten anderen Mitteln (Stecksystemen, Leitungsarten, Leitungslängen, Leiterplattenausführungen usw.) verwirklicht werden kann, sofern diese nur den beabsichtigten Zweck erfüllen.

## Patentansprüche

1. Adapterkabel zur Verbindung eines Funktelefons mit dem Bordnetz eines Kraftfahrzeuges,
dadurch **gekennzeichnet,**
daß das Kabel eine Adapterschaltung (10) umfaßt, die eine Schnittstellenadaption zwischen einer Anschlußbox (11) und dem Kraftfahrzeugbordnetz (12) bildet.

2. Adapterkabel nach Anspruch 1, dadurch gekennzeichnet, daß die Adapterschaltung (10) eine Schaltung (13, 14, 15) zur Siebung von Wechselspannungsanteilen enthält.

3. Adapterkabel nach Anspruch 2, dadurch gekennzeichnet, daß die Siebschaltung aus zwei Kondensatoren (13, 14) und einer Spule (15) besteht.

4. Adapterkabel nach einem der vorangehenden Ansprüche, dadurch gekennzeichnet, daß die Adapterschaltung (10) vier Kondensatoren (16, 17, 18, 19) zur Ableitung hochfrequenter Störungen umfaßt.

5. Adapterkabel nach einem der vorangehenden Ansprüche, dadurch gekennzeichnet, daß ein Spannungsteiler (21, 22) zur Anpassung des Sprachsignals innerhalb der Adapterschaltung (10) vorgesehen ist.

6. Adapterkabel nach einem der vorangehenden Ansprüche, dadurch gekennzeichnet, daß zur Gleichstromversorgung ein Arbeitswiderstand (24) innerhalb der Adapterschaltung (10) angeschlossen ist.

7. Adapterkabel nach einem der vorangehenden Ansprüche, dadurch gekennzeichnet, daß als Verpolschutz eine Diode (26) zwischengeschaltet ist.
